# EUROPÄISCHE PATENTANMELDUNG

(11) **EP 4 014 923 A1**
(43) Veröffentlichungstag der Anmeldung: **22.06.2022**
(21) Anmeldenummer: 20215762.4
(22) Anmeldetag: 18.12.2020
(51) Int. Cl.: A61C 8/00

(54) **MODULARES DENTALIMPLANTAT**

(71) Anmelder: maxon international ag, 6072 Sachseln (CH)
(72) Erfinder: Buurlage, Thorsten, 69517 Gorxheimertal (DE)
(74) Vertreter: IPrime Rentsch Kaelin AG

(57) **Zusammenfassung**

Ein modulares Dentalimplantat umfasst einen in einem Kieferknochen verankerbaren Basiskörper, welcher aus einem für Implantate geeigneten metallischen Werkstoff gefertigt ist, und ein an dem Basiskörper befestigbares Aufbauteil, welches aus einem keramischem Werkstoff gefertigt ist. Im zusammengebauten Zustand des Dentalimplantats berühren sich der Basiskörper und das Aufbauteil in einem Kontaktbereich, beziehungsweise sind aneinander liegend angeordnet. Die Oberfläche des Aufbauteils ist in dem genannten Kontaktbereich derart bearbeitet, dass sie in Abhängigkeit der Härte des metallischen Werkstoffes des Basiskörpers und der Härte des keramischen Werkstoffes des Aufbauteils einen Mittenrauwert Ra aufweist, welcher im operativen Betrieb des Dentalimplantats eine Beschädigung der Oberfläche des Basiskörpers in dem genannten Kontaktbereich durch das Aufbauteil, insbesondere einen zerspanenden Materialabtrag, verhindert.

## Beschreibung

### Gebiet der Technik

Die Erfindung betrifft ein modulares Dentalimplantat, einen Basiskörper und ein Aufbauteil für ein modulares Dentalimplantat sowie ein entsprechendes Herstellungsverfahren, gemäss dem Oberbegriff der unabhängigen Patentansprüche.

### Technologischer Hintergrund

Dentalimplantate können einteilig und mehrteilig ausgestaltet sein. Allgemein haben sich mehrteilige Dentalimplantate aufgrund ihrer Vorteile gegenüber einteiligen Dentalimplantaten durchgesetzt. Mehrteilige Dentalimplantate können besser an die konkret vorgesehene Verwendung angepasst werden und bieten besseren Schutz vor unerwünschten Belastungen während des Einheilungsprozesses.

Die aus dem Stand der Technik bekannten mehrteiligen Dentalimplantate sind häufig dreiteilig aufgebaut und umfassen einen in einen Kieferknochen einzusetzenden Basiskörper, ein am Basiskörper zu befestigendes Aufbauteil und eine auf das Aufbauteil aufzusetzende Suprakonstruktion. Der auch als Implantatkörper bekannte Basiskörper soll funktional die Zahnwurzel ersetzen und ist meistens zylindrisch oder konisch geformt. In der Regel weist der Basiskörper ein Gewinde auf, über welches der Basiskörper durch Einschrauben im Kieferknochen befestigt werden kann. Das auch als Implantataufbau oder Abutment bekannte Aufbauteil dient als Zwischenglied zwischen Basiskörper und Suprakonstruktion und wird üblicherweise in den Basiskörper eingeschraubt und/oder eingeklebt. Die Suprakonstruktion stellt den eigentlichen Zahnersatz dar, in der Regel in der Form einer Krone oder Brücke, oder auch einer Prothese. Ein Dentalimplantat kann auch zwei oder mehr Basiskörper zur Verankerung einer Suprakonstruktion aufweisen, beispielsweise bei Brücken und Prothesen. Basiskörper und Aufbauteil sind in den Kiefer eingebettet beziehungsweise sind von der Suprakonstruktion abgedeckt. Die Suprakonstruktion selber liegt im Mundraum frei.

Ein modulares Dentalimplantat ist beispielsweise aus US 2019/0223986 A1 bekannt.

In der Zahnprothetik werden vorzugsweise möglichst biokompatible und/oder bioinerte Materialien verwendet. Sehr häufig verwendet werden Titan oder Titanlegierungen, und keramische Materialien, insbesondere Zirkoniumoxid-Keramik. Insbesondere der Basiskörper eines Dentalimplantats ist vorteilhaft aus einem solchen bioinerten Material gefertigt, damit der Basiskörper dem Patienten möglichst komplikationsfrei eingesetzt werden kann und insbesondere eine Rückbildung des Zahnfleisches oder des Knochengewebes vermieden werden kann. Sowohl das Material als auch die Struktur des Basiskörpers sollen einen hohen Grad der Osseointegration und Periointegration ermöglichen. Die vorgenannten Anforderungen bzgl. hoher Biokompatibilität und Bioinertheit gelten auch für das Aufbauteil und die Suprakonstruktion.

Der Vorteil der Verwendung von Titan für Implantate, welche in den Kieferknochen eingesetzt werden, liegt in der über Jahrzehnte gut dokumentierte Biokompatibilität. Implantatkörper aus Titan belasten den Körper des Patienten möglichst geringfügig. Weiter hat das Metall Titan den Vorteil, zäh bzw. nicht spröde zu sein. Gleichzeitig hat es aber auch den Nachteil, dass es durch seine dunkelgraue Färbung als Fremdkörper in der Mundhöhle wahrgenommen werden kann. Titan wird deshalb bevorzugt für in den Kieferknochen eingesetzte Zahnimplantate verwendet, die vom Zahnfleisch bedeckt und somit in der Mundhöhle nicht sichtbar sind.

Keramikteile weisen ebenfalls eine sehr gute Biokompatibilität auf und sind damit gut körperverträglich. Der Vorteil von Keramik ist, dass die Keramik eine Färbung aufweisen kann, welche weitgehendst der natürlichen Zahnfärbung entspricht und damit weniger oder gar nicht als Fremdkörper in der Mundhöhle wahrgenommen wird. Weiter ist die Abwesenheit von Metall auch zunehmend von Interesse wegen der Vermeidung von Allergien. Keramikteile werden bevorzugt für den Zahnaufbau und anderen in der Mundhöhle sichtbare Teile wie beispielsweise Abutment, Healing Komponenten, Locater usw. eingesetzt.

Für den Langzeiterfolg eines Dentalimplantats ist weiter eine verlässliche und gegen Knochen und Zahnfleisch abgedichtete Verbindung von Aufbauteil und Basiskörper wichtig. Eine mangelhafte Verbindung zwischen Aufbauteil und Basiskörper kann zur Lockerung oder Beschädigung des Dentalimplantats führen. Undichte Verbindungen ermöglichen das Eindringen von Bakterien in das Implantat, was zu Periimplantitis führen und somit beispielsweise Kieferknochenschwund verursachen kann.

Weiter stellen die im Gebiss auftretende Kräfte hohe Anforderungen an Material und Konstruktion. So müssen Dentalimplantate sämtliche im Gebiss auftretenden, hohen Kräfte aufnehmen können, ohne zu brechen, einzureissen oder sich zu lockern.

Keramik, insbesondere Zirkonoxid, weist eine wesentlich höhere Härte auf als Titan. Keramische Teile weisen durch die üblichen Bearbeitungsmethoden an der Oberfläche feine scharfkantige Strukturen auf. Berühren sich Elemente aus Keramik und Titan, so kann durch die scharfkantigen Oberflächenstrukturen der Keramik die Oberfläche des Titans beschädigt werden. Dies gilt insbesondere, weil Dentalimplantate starken Kräften ausgesetzt sind, beispielsweise während des Kauens, und eine geringfügige Bewegung der Elemente gegeneinander nicht vermieden werden kann. Dies können insbesondere rotatorische Relativbewegungen um die Längsachse des Basiskörpers bzw. Aufbauteils sein, als auch axiale Relativbewegungen. Das Titanimplantat wird dann insbesondere durch die Kaubewegungen kontinuierlich beschädigt. Es ist deshalb bekannt, dass keramische und metallische Materialien bei einem Dentalimplantat möglichst keine Kontaktflächen bzw. Kontaktpunkte zueinander haben sollten, insbesonders wenn dabei Abrieb von den Kontaktflächen, in der Form von sehr feinen Titanspänen, in den Mundraum und damit in dem Körper des Patienten gelangen kann.

Es besteht ein allgemeines Bedürfnis nach Verbesserungen in diesem Gebiet.

### Darstellung der Erfindung

Eine Aufgabe der Erfindung ist es, ein modulares Dentalimplantat zur Verfügung zu stellen, welches die oben erwähnten und andere Nachteile nicht aufweist.

Insbesondere soll ein solches modulares Dentalimplantat die Kombination eines metallischen Basiskörpers mit einem keramischen Aufbauteil ermöglichen.

Ein solches modulares Dentalimplantat soll zuverlässig, langlebig und gut verträglich sein.

Diese und andere Aufgaben werden gelöst durch ein erfindungsgemässes modulares Dentalimplantat, einen erfindungsgemässen Basiskörper für ein modulares Dentalimplantat, ein erfindungsgemässes Aufbauteil für ein modulares Dentalimplantat, sowie ein erfindungsgemässes Herstellungsverfahren, gemäss den unabhängigen Ansprüchen. Weitere vorteilhafte Ausführungsformen gehen aus den abhängigen Ansprüchen und der Beschreibung hervor.

Die erfindungsgemässe Lösung kann durch verschiedene, jeweils für sich vorteilhafte und, sofern nicht anders ausgeführt, beliebig miteinander kombinierbare Ausgestaltungen weiter verbessert werden. Auf diese Ausführungsformen und die mit ihnen verbundenen Vorteile ist im Folgenden eingegangen.

Ein erster Aspekt der Erfindung betrifft ein modulares Dentalimplantat mit einem in einem Kieferknochen verankerbaren Basiskörper, welcher aus einem für Implantate geeigneten metallischen Werkstoff gefertigt ist, und mit dem Basiskörper verbindbaren Aufbauteil, welches aus einem für Implantat-Aufbauteile geeigneten keramischem Werkstoff gefertigt ist. Im zusammengebauten Zustand des Dentalimplantats berühren sich der Basiskörper und das Aufbauteil in einem Kontaktbereich, beziehungsweise sind in einem Kontaktbereich aneinander liegend angeordnet. Die Oberfläche des Aufbauteils ist in dem genannten Kontaktbereich derart bearbeitet, dass sie in Abhängigkeit der Härte des metallischen Werkstoffes des Basiskörpers und der Härte des keramischen Werkstoffes des Aufbauteils einen Mittenrauwert Ra aufweist, welcher im operativen Betrieb des Dentalimplantats eine Beschädigung der Oberfläche des Basiskörpers in dem genannten Kontaktbereich durch das Aufbauteil, insbesondere einen zerspanenden Materialabtrag, verhindert bzw. weitgehendst ausschliesst.

Eine grosse Kontaktfläche zwischen Basiskörper und Aufbauteil ist vorteilhaft, denn sie führt zu einer höheren Haftreibung zwischen den beiden Elementen und gleichzeitig zu einer geringeren Flächenpressung. Dies führt zu einer grösseren Stabilität des zusammengebauten Dentalimplantats. Eine grosse Kontaktfläche führt zudem bei gleicher wirkender Kraft zu einem kleineren Anpressdruck. Damit kommt es bei den während der Benutzung des Dentalimplantats auftretenden Relativbewegungen des Basiskörpers und Aufbauteils zu geringeren Scherkräften, was ebenfalls den unerwünschten mechanischen Materialabtrag reduziert.

In einem erfindungsgemässen Dentalimplantat besteht der Basiskörper vorteilhaft aus Titan beziehungsweise aus einer Titanlegierung.

In einem erfindungsgemässen Dentalimplantat besteht das Aufbauteil vorteilhaft aus Zirkonoxid, insbesondere aus Yttrium-stabilisiertem Zirkonoxid.

In einer anderen Ausführungsform kann der Basiskörper eines erfindungsgemässen Dentalimplantats ebenfalls aus keramischem Material bestehen. Die Ausführungen zur Oberfläche im Kontaktbereich des Aufbauteils gelten in einer solchen Ausführungsvariante auch für die Oberfläche im Kontaktbereich des Basiskörpers.

Solche vorteilhaften Dentalimplantate ermöglichen es, zwei vorteilhaften Materialien, also den metallischer Werkstoff, insbesondere Titan, und das keramische Material, insbesondere Zirkonoxid, in Kombination für das Dentalimplantat zu nutzen, ohne dass bei direktem Kontakt die aus dem Stand der Technik bekannten Probleme auftreten. Durch die erfindungsgemässe titanfreundlich Ausgestaltung der Keramikoberfläche im Kontaktbereich zerfrisst das wesentlich härtere keramische Material nicht die Metalloberfläche. Dies kann erreicht werden durch ein Abrunden der scharfkantigen Körner des keramischen Materials.

In einer vorteilhaften Ausführungsform eines erfindungsgemässen Dentalimplantats ist die Oberfläche des Aufbauteils im Kontaktbereich poliert.

Mögliche Verfahren zum Abrunden, Glätten oder Polieren der scharfkantigen Keramikoberfläche sind Gleitschleifen, Bürsten, Läppen oder Strahlen.

Gleitschleifen ist ein mechanisch-chemisches Verfahren (nachfolgend «Gleitschleifprozess») zum Entgraten, Verrunden, Glätten oder Polieren von Einzelteilen und Serienteilen. Durch Vibration und Umwälzbewegungen werden beim Gleitschleifen die losen Werkstücke in eine Relativbewegung zu den Schleifkörpern bzw. Polierkörpern gebracht, wodurch eine Oberflächenglättung entsteht. Durch Gleitschleifen können somit die Aufbauteile, welche aus einem keramischen Werkstoff bestehen, geschliffen und poliert werden. Der Gleitschleifprozess kann beispielsweise in einem Rundvibrator erfolgen. Rundvibrator-Vorrichtungen werden von verschiedenen Herstellern wie beispielsweise RÖSLER Oberflächentechnik GmbH oder Walther Trowal GmbH & Co. KG angeboten. Die genannten Herstellerfirmen liefern ebenfalls die für den Betrieb dieser Vorrichtungen notwendigen Verbrauchsmaterialien wie Schleifkörper, Compounds und Additive.

Beispielsweise kann durch einen lange andauernden Gleitschleifprozess von mindestens 48-72 Stunden an der Oberflächen des Keramikteiles ein Mittelrauwert Ra erreicht werden. Ein solcher Mittelrauwert verhindert im operativen Betrieb des Dentalimplantats eine Beschädigung der Oberfläche des Basiskörpers durch das Aufbauteil in dem genannten Kontaktbereich, insbesondere einen zerspanenden Materialabtrag.

Zum Erreichen des entsprechenden Mittelrauwerts werden im Gleitschleifprozess Schleifkörper zu den zu bearbeitenden Werkstücken, hier den Aufbaueilen, zugegeben. Vorzugsweise ist die Form der Schleifkörper auf die Geometrie der Oberfläche der Werkstücke abgestimmt. Dabei ist darauf zu achten, dass alle wesentlichen Konturen erreicht werden und keine Verklemmungen zwischen den Schleifkörpern beziehungsweise Schleifkörpern und Werkstücken entstehen können. Die Schleifkörper können flache, runde oder spitze Formen aufweisen. Durch spitze Formen können die Schleifkörper auch kantige Oberflächen der Werkstücke polieren. Durch flache oder runde Formen kann vermieden werden, dass kantige Bereiche der Oberfläche der Werkstücke poliert werden.

Ferner beeinflussen die Schleifkörper durch ihre Form auch das Schleifverhalten. Gewölbte, runde Formen arbeiten weniger aggressiv als kantige Schleifkörpergeometrien. Grundsätzlich kann gesagt werden, dass je grösser und schwerer der Schleifkörper, desto intensiver und grösser ist die Schleifleistung und desto gröber und rauer ist das Schliffbild.

Die Schleifkörper können aus Keramik wie beispielsweise Aluminiumoxid gefertigt sein. Vorzugsweise weist die Keramik der Schleifkörper eine höhere Festigkeit auf als die zu polierenden Aufbauteile. Es können aber auch Schleifkörper aus Kunststoff, Stein oder aus Metall wie beispielsweise Messing oder Edelstahl für das Gleitschleifen verwendet werden.

Der Grössenunterscheid zwischen den keramischen Aufbauteilen und den Schleifkörpern sollte so gewählt werden, dass nach dem Gleitschleifprozess ein Separieren von Werkstücken und Schleifkörpern nach Grösse ermöglicht wird.

Dem Gleitschleifprozess kann zusätzlich ein Compound (Behandlungsmittel) und ein Schleifpulver zugegeben werden. Das Compound kann aus einer seifigen oder öligen Flüssigkeit bestehen, mit welchem das Schleifpulver gleichmässig auf den Schleifkörpern verteilt werden kann, wodurch der Polierprozess optimiert wird. Weiter kann durch das Compound die Oberfläche von Schleifkörpern und Werkstücken sauber gehalten und der Gleitschleifprozess auf konstanter Qualität gehalten werden. Als Schleifpulver, welches dem Gleitschleifprozess zusätzlich beigemischt werden kann, eignet sich beispielsweise Diamantpulver oder Keramikpulver. Das Keramikpulver kann beispielsweise aus Aluminiumsulfid, Siliciumnitrid, Zirconiumoxid, Borcarbid oder Bornitrid bestehen. Das Schleifpulver kann dem Schleifprozess beigemischt oder in den Schleifkörper enthalten sein. Es können auch verschiedene Schleifpulver gemischt werden.

Das Compound wir ausgewählt nach dem zu bearbeitenden Werkstoff, den Eigenschaften des Compounds sowie dem angestrebtem Bearbeitungsziel. Ein mögliches Compound für den Gleitschleifprozess für die offenbarten vorteilhaften Aufbauteile ist ARF-S oder M10 von Walther Trowal oder IMR4 von RÖSLER. Die Inhaltsstoffe der Compounds werden von den Herstellern nicht publiziert. Meist werden flüssige Compounds eingesetzt, da sie die Anforderungen an moderne Dosiersysteme am besten erfüllen. Aber auch durch pulverförmige oder pastenförmige Compounds kann die Gleitschleifbearbeitung im Einzelfall ergänzt werden.

Es können auch Additive zugeführt werden, welche die Schleifleistung zusätzlich verstärken. Die Zugabe der Additive erfolgt chargenweise mit ca. 0.5-1.0 kg pro 100 kg Schleifkörper.

Der arithmetische Mittenrauwert Ra ist durch DIN EN ISO 4287:2010 normiert. Nach der Bearbeitung weisst das Keramikteil an der Oberfläche zumindest im Bereich, welcher mit dem Titanteil in Kontakt kommt, einen Mittenrauwert Ra der Keramikoberfläche ≤ 0.08 Mikrometer auf, noch vorteilhafter ≤ 0.04 Mikrometer, und besonders vorteilhaft ≤ 0.02 Mikrometer. In einer vorteilhaften Variante liegt der Mittenrauwert Ra im Kontaktbereich des Keramikteils zwischen 0.02 und 0.04 Mikrometer.

Vorteilhaft beträgt bei einem erfindungsgemässen Dentalimplantat im Kontaktbereich der Mittenrauwert Ra der Oberfläche des Aufbauteils ≤ 0.08 Mikrometer, noch vorteilhafter ≤ 0.04 Mikrometer, und besonders vorteilhaft ≤ 0.02 Mikrometer.

In einer vorteilhaften Variante liegt der Mittenrauwert Ra im Kontaktbereich des Aufbauteils zwischen 0.02 und 0.04 Mikrometer.

In einer anderen vorteilhaften Ausführungsform eines erfindungsgemässen Dentalimplantats ist die Oberfläche des Aufbauteils im Kontaktbereich beschichtet, beispielsweise metalldampfbeschichtet oder plasmabeschichtet.

In einer weiteren vorteilhaften Ausführungsform eines erfindungsgemässen Dentalimplantats ist die Oberfläche des Aufbauteils im Kontaktbereich glasiert.

Eine Glasur kann durch Auftrag einer oder mehrerer Glasurschichten auf das Keramikteil mit anschliessendem Aufschmelzen erreicht werden. Eine andere Möglichkeit ist das Aufbringen einer Substanz oder eines Substanzgemisches, beispielsweise eines Salzes, auf die Oberfläche des Keramikteils, welche den Schmelzpunkt des Keramikmaterials lokal unter die Sintertemperatur senkt, so dass eine entsprechende Glasschicht entsteht. Das Aufbringen einer solchen Substanz kann auch über die Gasphase erfolgen.

Aufgrund der glatteren Oberfläche ist der Abrieb der im Kontaktbereich aufliegenden Oberfläche des Basiskörpers geringer.

In noch einer weiteren vorteilhaften Ausführungsform eines erfindungsgemässen Dentalimplantats ist die Oberfläche des Basiskörpers im Kontaktbereich beschichtet, beispielsweise plasmabeschichtet, anodisiert oder emailliert.

Ein Vorteil einer Email-Beschichtung des Basiskörpers im Kontaktbereich ist die Glattheit der Oberfläche, welche hervorstehenden Strukturen an der Oberfläche des Aufbauteils im Kontaktbereichs keine Möglichkeit gibt, einzuhaken und so Material abzuscheren.

In noch einer anderen vorteilhaften Ausführungsform eines erfindungsgemässen Dentalimplantats ist die Oberfläche des Basiskörpers im Kontaktbereich gehärtet oder anodisiert.

Die härtere Oberfläche des Metalls des Basiskörpers führt zu geringerem Abrieb am Metallteil aufgrund des Kontakts mit dem härteren keramischen Aufbauteils im Kontaktbereich.

Die Art der Beschichtung beziehungsweise Härtung ist vorteilhaft so gewählt, dass die resultierende Härte der Oberfläche des Basiskörpers im Kontaktbereich ähnlich ist wie die Härte der Oberfläche des Aufbauteils im Kontaktbereich. Dies hat zur Folge, dass der Abrieb des metallischen Basiskörpers minimiert wird.

Vorteilhaft weist der Basiskörper und/oder das Aufbauteil eines erfindungsgemässen Dentalimplantats im Kontaktbereich keine Kanten auf.

Vorteilhaft weisen in einem erfindungsgemässen Dentalimplantat die Oberfläche des Basiskörpers und die Oberfläche des Aufbauteils im Kontaktbereich eine geometrische Stetigkeit G1 auf (tangentiale Stetigkeit).

Eine G1 Stetigkeit der Oberflächen im Kontaktbereich bedeutet insbesondere, dass auf keiner der Oberflächen im Kontaktbereich Kanten (Stetigkeit G0) vorhanden sind, welche bei einer, auch kleinen, relativen Verschiebung der Bauteile zueinander in der gegenüber liegenden Oberfläche einhaken und Material abscheren können, bzw. selber besonders leicht abgeschert werden können.

Besonders vorteilhaft weisen in einem erfindungsgemässen Dentalimplantat die Oberfläche des Basiskörpers und die Oberfläche des Aufbauteils im Kontaktbereich eine geometrische Stetigkeit G2 auf (Krümmungsstetigkeit).

Eine solche G2-Stetigkeit der Oberflächen im Kontaktbereich hat den Vorteil, dass bei einer kleinen relativen Verschiebung der Bauteile zueinander der Anpressdruck näherungsweise konstant bleibt. Die gleichmässig wirkenden Kräfte führen zu einer verminderten asymmetrisch wirkenden mechanischen Kraftwirkung und damit ebenfalls zu einer Reduktion des mechanisch verursachten Materialabtrags an der Oberfläche.

Vorteilhaft ist in einem erfindungsgemässen Dentalimplantat im Kontaktbereich die Oberfläche des Basiskörpers und/oder des Aufbauteils abgerundet.

Vorteilhaft ist in einem erfindungsgemässen Dentalimplantat im Kontaktbereich die Oberfläche des härteren Bauteils abgerundet.

Vorteilhaft werden die aus Keramik gefertigten Teile eines erfindungsgemässen Dentalimplantats, insbesondere ein aus Keramik gefertigtes Aufbauteil, mittels Pulverspritzguss-Verfahren hergestellt. Das Pulverspritzgiessen eines solchen keramischen Bauteils führt wegen der vorteilhaft sehr glatten Oberfläche der Spritzgussform zu einer wesentlich glatteren Oberfläche des darin mittels Pulverspritzguss hergestellten Keramikteils als dies mit nachträglichen subtraktiven Bearbeitungsverfahren, insbesondere zerspanenden Verfahren wie Fräsen, Schleifen oder Bohren möglich ist. Diese Urformung des Keramikteils ohne mechanische Materialabtragung vermeidet so die entsprechenden Bearbeitungsspuren, welche ansonsten den Mittenrauwert Ra erhöhen.

Auch vorteilhafte Freiformen an den Bauteilen sind wesentlich einfacher herzustellen als mit den vorgenannten subtraktiven Bearbeitungsverfahren.

In einer weiteren vorteilhaften Ausführungsform eines erfindungsgemässen Dentalimplantats weist das Aufbauteil einen Vorsprung auf, der im zusammengebauten Zustand des Dentalimplantats in eine Ausnehmung des Basiskörpers eingesteckt ist.

Der Basiskörper und/oder das Aufbauteil eines erfindungsgemässen Dentalimplantats bestehen vorteilhaft aus zwei oder mehr Elementen.

Vorteilhaft besteht im zusammengebauten Zustand eines erfindungsgemässen Dentalimplantats zwischen dem Basiskörper und dem Aufbauteil ein verdrehsicherer Formschluss.

In einer vorteilhaften Ausführungsform eines erfindungsgemässen Dentalimplantats sind der Basiskörper und das Aufbauteil im zusammengebauten Zustand des Dentalimplantats mit einer Verbindungsschraube verbunden.

Ein zweiter Aspekt der Erfindung betrifft einen Basiskörper für ein modulares Dentalimplantat, welcher dazu vorgesehenen ist, in einem Kieferknochen verankert und mit einem Aufbauteil eines Dentalimplantats verbunden zu werden. Der Basiskörper ist aus einem für Implantate geeigneten metallischen Werkstoff gefertigt. Die Oberfläche in einem Kontaktbereich des Basiskörpers ist dafür vorgesehen, im zusammengebauten Zustand des Dentalimplantates eine Oberfläche des Kontaktbereichs des Aufbauteils zu berühren, beziehungsweise auf der Oberfläche des Kontaktbereichs des Aufbauteils aufzuliegen. Die Oberfläche des Basiskörpers ist in dem genannten Kontaktbereich beschichtet, beispielsweise plasmabeschichtet oder emailliert, und/oder ist in dem genannten Kontaktbereich gehärtet.

Die Art der Beschichtung bzw. Härtung ist vorteilhaft so gewählt, dass die resultierende Härte der Oberfläche des Basiskörpers im Kontaktbereich ähnlich ist wie die Härte der Oberfläche eines Aufbauteils im Kontaktbereich. Dies hat zur Folge, dass der Abrieb des metallischen Basiskörpers minimiert wird.

Ein weiterer Vorteil einer Email-Beschichtung des Basiskörpers im Kontaktbereich ist die Glattheit der Oberfläche, welche hervorstehenden Strukturen an der Oberfläche eines Aufbauteils im Kontaktbereichs keine Möglichkeit gibt, einzuhaken und so Material abzuscheren.

Vorteilhaft besteht ein solcher erfindungsgemässer Basiskörper aus Titan beziehungsweise aus einer Titanlegierung.

Vorteilhaft weist ein solcher erfindungsgemässer Basiskörper im Kontaktbereich keine Kanten auf.

Alternativ oder zusätzlich ist bei einem solchen erfindungsgemässen Basiskörper im Kontaktbereich die Oberfläche des Basiskörpers stetig.

Alternativ oder zusätzlich ist bei einem solchen erfindungsgemässen Basiskörper im Kontaktbereich die Oberfläche des Basiskörpers abgerundet.

Ein dritter Aspekt der Erfindung betrifft ein Aufbauteil für ein modulares Dentalimplantat, welches dazu vorgesehen ist, mit einem Basiskörper eines Dentalimplantats verbunden zu werden. Das Aufbauteil ist aus einem für Implantate geeigneten keramischem Werkstoff gefertigt ist. Die Oberfläche in einem Kontaktbereich des Aufbauteils ist dafür vorgesehen, im zusammengebauten Zustand des Dentalimplantates eine Oberfläche des Kontaktbereichs des Basiskörpers zu berühren, beziehungsweise auf der Oberfläche des Kontaktbereichs des Basiskörpers aufzuliegen. Im Kontaktbereich beträgt der Mittenrauwert Ra der Oberfläche des Aufbauteils ≤ 0.08 Mikrometer, vorteilhaft ≤ 0.04 Mikrometer ist, und besonders vorteilhaft ≤ 0.02 Mikrometer.

Vorteilhaft besteht ein solches Aufbauteil aus Zirkonoxid, insbesondere aus Yttrium-stabilisiertem Zirkonoxid.

Alternativ oder zusätzlich ist bei einem erfindungsgemässen Aufbauteil die Oberfläche des Aufbauteils im Kontaktbereich poliert.

Alternativ oder zusätzlich ist bei einem erfindungsgemässen Aufbauteil die Oberfläche des Aufbauteils im Kontaktbereich glasiert.

Alternativ oder zusätzlich weist ein solches erfindungsgemässes Aufbauteil im Kontaktbereich keine Kanten auf.

Alternativ oder zusätzlich ist bei einem erfindungsgemässen Aufbauteil die Oberfläche des Aufbauteils im Kontaktbereich stetig.

Alternativ oder zusätzlich ist bei einem erfindungsgemässen Aufbauteil die Oberfläche des Aufbauteils im Kontaktbereich abgerundet.

Ein erfindungsgemässes Aufbauteil ist vorteilhaft pulverspritzgegossen.

Ein vierter Aspekt der Erfindung betrifft ein Verfahren zur Herstellung eines modularen Dentalimplantats mit einem in einem Kieferknochen verankerbaren Basiskörper, welcher aus einem für Implantate geeigneten metallischen Werkstoff gefertigt ist, und einem an dem Basiskörper befestigbaren Aufbauteil, welches aus einem keramischem Werkstoff gefertigt ist. Ein solches vorteilhaftes Verfahren umfasst die Schritte:
- Bereitstellen eines gesinterten keramischen Aufbauteils, beispielsweise aus Zirkonoxid;
- Behandlung einer Oberfläche des keramischen Aufbauteiles in einem Kontaktbereich, in welchem sich im zusammengebauten Zustand des Dentalimplantats der Basiskörper und das Aufbauteil berühren, beziehungsweise in welchem der Basiskörper und das Aufbauteil aneinander liegend angeordnet sind, so dass im Kontaktbereich ein Mittenrauwert Ra der Oberfläche des Aufbauteils von ≤ 0.08 Mikrometer, vorteilhaft ≤ 0.04 Mikrometer, und besonders vorteilhaft ≤ 0.02 Mikrometer resultiert.

Die Behandlung der Oberfläche kann in einem solchen Verfahren vorteilhaft erreicht werden durch eine Beschichtung der Oberfläche des Aufbauteils im Kontaktbereich, beispielsweise mittels Metalldampfbeschichtung oder Plasmabeschichtung.

In einer weiteren vorteilhaften Ausführungsvariante des Verfahrens eines erfindungsgemässen Dentalimplantats ist die Oberfläche des Aufbauteils im Kontaktbereich glasiert.

Eine Glasur kann durch Auftrag einer oder mehrerer Glasurschichten auf das Keramikteil mit anschliessendem Aufschmelzen erreicht werden. Eine andere Möglichkeit ist das Aufbringen einer Substanz oder eines Substanzgemisches auf die Oberfläche des Keramikteils, welche den Schmelzpunkt des Keramikmaterials lokal unter die Sintertemperatur senkt, so dass eine entsprechende Glasschicht entsteht. Aufgrund der glatteren Oberfläche ist der Abrieb der im Kontaktbereich aufliegenden Oberfläche des Basiskörpers geringer.

In noch einer weiteren vorteilhaften Ausführungsvariante des Verfahrens ist die Oberfläche des Basiskörpers im Kontaktbereich beschichtet, beispielsweise plasmabeschichtet oder emailliert.

Ein Vorteil einer Email-Beschichtung des Basiskörpers im Kontaktbereich ist die Glattheit der Oberfläche, welche hervorstehenden Strukturen an der Oberfläche des Aufbauteils im Kontaktbereichs keine Möglichkeit gibt, einzuhaken und so Material abzuscheren.

In noch einer anderen vorteilhaften Ausführungsvariante eines erfindungsgemässen Verfahrens wird die Oberfläche des Basiskörpers im Kontaktbereich gehärtet.

Die härtere Oberfläche des Metalls des Basiskörpers führt zu geringerem Abrieb am Metallteil aufgrund des Kontakts mit dem härteren keramischen Aufbauteils im Kontaktbereich.

Die Art der Beschichtung beziehungsweise Härtung ist vorteilhaft so gewählt, dass die resultierende Härte der Oberfläche des Basiskörpers im Kontaktbereich ähnlich ist wie die Härte der Oberfläche des Aufbauteils im Kontaktbereich. Dies hat zur Folge, dass der Abrieb des metallischen Basiskörpers minimiert wird.

In einem erfindungsgemässen Verfahren wird das keramische Aufbauteil vorteilhaft pulverspritzgegossen. Das Pulverspritzgiessen eines keramischen Bauteils führt wegen der vorteilhaft sehr glatten Oberfläche der Spritzgussform zu einer wesentlich glatteren Oberfläche des darin mittels Pulverspritzguss hergestellten Keramikteils als dies mit subtraktiven Bearbeitungsverfahren, insbesondere zerspanenden Verfahren wie Fräsen oder Bohren möglich ist. Auch vorteilhafte Freiformen an den Bauteilen sind wesentlich einfacher herzustellen als mit den vorgenannten subtraktiven Bearbeitungsverfahren.

Weitere Aspekte der vorliegenden Erfindung ergeben sich auch aus der nachfolgenden Beschreibung.

### Kurze Beschreibung der Zeichnungen

Im Folgenden wird das erfindungsgemässe Dentalimplantat anhand von Zeichnungen erläutert.
Figur 1 zeigt schematisch einen Längsschnitt durch eine mögliche Ausführungsform eines erfindungsgemässen Dentalimplantats.
Figur 2 zeigt schematisch eine Detailansicht aus dem Längsschnitt der Figur 1, in welchem der Kontaktbereich zwischen Basiskörper und Aufbauteil gezeigt ist.
Figur 3 zeigt schematisch einen Längsschnitt das Dentalimplantat aus Figur 1 in Explosionsdarstellung.

### Wege zur Ausführung der Erfindung

Die im Folgenden gegebenen Beispiele dienen der besseren Veranschaulichung der Erfindung, sind jedoch nicht dazu geeignet, die Erfindung auf die hierin offenbarten Merkmale zu beschränken.

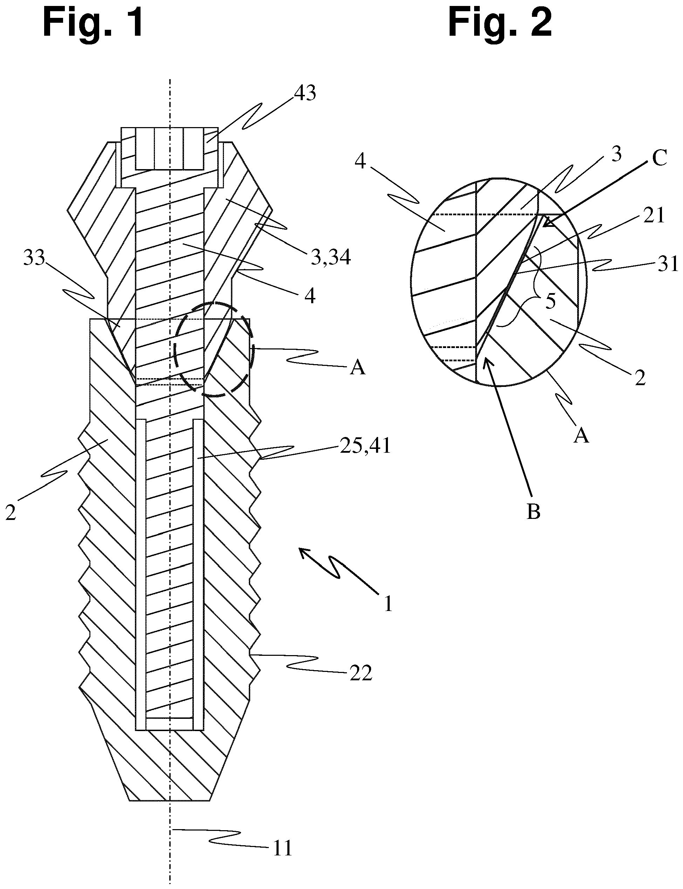

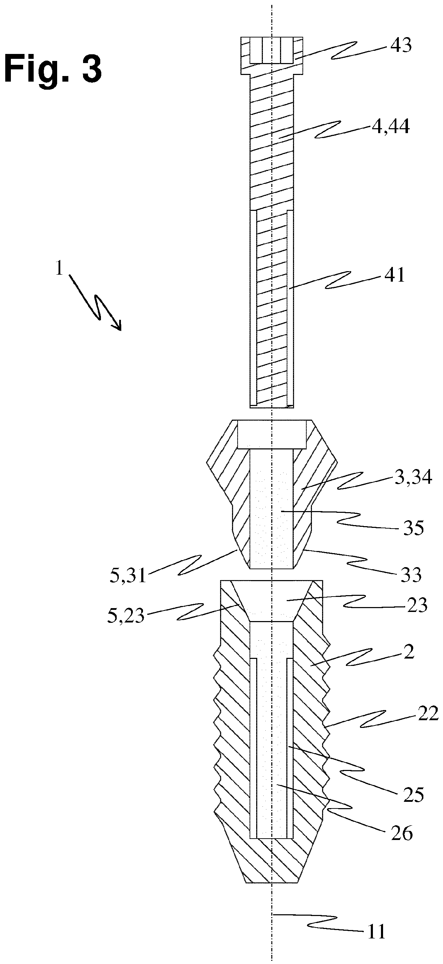

Ein vorteilhaftes Ausführungsbeispiel eines erfindungsgemässen Dentalimplantats 1 ist in den Figuren 1, 2 und 3 dargestellt. Das Dentalimplantat 1 besteht aus einem metallischen Basiskörper 2 und einem keramischen Aufbauteil 3, welche durch eine Verbindungsschraube 4 entlang der Längsachse 11 wirkverbunden sind.

Der Basiskörper 2, welches dazu vorgesehen ist, dauerhaft in einem Kieferknochen befestigt zu werden, weist ein Aussengewinde 22 auf, mit welchem der Basiskörper bei der Implantation in ein zuvor gebohrtes Sackloch im Kieferknochen eingeschraubt werden kann. Je nachdem, ob in dieses Sackloch zuvor ein Gewinde geschnitten worden ist oder nicht, kann das Aussengewinde 22 des Basiskörpers 2 geeignet gewählt werden. Beispielsweise kann das Aussengewinde als Schneidegewinde ausgestaltet sein, so dass kein separates Innengewinde in der Bohrung im Kieferknochen angebracht werden muss.

Gefluchtet zur Längsachse 11 ist im Basiskörper 2 ein zum koronalen Längsende hin offenes, im wesentlichen zylindrisches Sackloch 26 angeordnet, mit einem Innengewinde 25, welches dafür vorgesehen ist, im zusammengebauten Zustand des Dentalimplantats 1 mit einem Aussengewinde 41 einer Verbindungsschraube 4 zu wechselwirken.

Das Sackloch 26 des Basiskörpers 2 weitet sich gegen aussen hin zu einer im Wesentlichen als Hohlkegel geformten konkaven Ausnehmung 23. Auf der konischen Mantelfläche der Ausnehmung 23 liegt im zusammengebauten Zustand des Dentalimplantats 1 die konische Mantelfläche des kegelförmigen apikale Vorsprungs 33 des keramischen Aufbauteils 3 auf.

Die konische Formgebung von Ausnehmung 23 und Vorsprung 33 hat den Vorteil, dass beim Zusammenbau des Dentalimplantats 1 eine Selbstzentrierung von Basiskörper und Aufbauteil 3 entlang der Längsachse 11 erfolgt. Gleichzeitig wird sowohl in Längsrichtung 11 als auch quer dazu das Spiel zwischen Basiskörper und Aufbauteil minimiert. Dies ist mit Blick auf die Vermeidung von Abrieb vorteilhaft.

Das Aufbauteil 3 umfasst einen Körper 34 mit durchgehendem Loch 35. Am apikalen Ende des Aufbauteils ist ein im Wesentlichen konisch geformter Vorsprung 33 angeordnet, welcher im zusammengebauten Zustand des Dentalimplantats 1 bündig in der konischen Ausnehmung 23 des Basiskörpers liegt. Am koronalen Ende des Aufbauteils ist eine Vertiefung angeordnet, in welcher der Schraubenkopf 43 der Verbindungsschraube 4 aufliegt.

Die im normalen operativen Betrieb des Dentalimplantats 1 in Kontakt kommenden Oberflächen der konischen Mantelflächen von Ausnehmung 23 und Vorsprung 33 definieren den Kontaktbereich 5. Ausnehmung 23 und Vorsprung 33 sind dabei so gestaltet, dass die Kontaktfläche möglichst grossflächig und im Wesentlichen konisch ist.

Eine grosse Kontaktfläche führt zu einer höheren formgebundenen Positionierung und damit zu einer grösseren Stabilität des zusammengebauten Implantats. Ferner führt eine grosse Kontaktfläche zu einer höheren Haftreibung und damit ebenfalls zu einer grösseren Stabilität des zusammengebauten Implantats. Zugleich führt eine grosse Kontaktfläche zu einem relativ gesehen geringeren Anpressdruck, und damit zu geringeren Reibkräften, und damit zu weniger unerwünschtem mechanischen Materialabtrag.

Gleichzeitig sind im gezeigten Ausführungsbeispiel die Ausnehmung 23 und der Vorsprung 33, und insbesondere deren Oberflächen im Kontaktbereich 5, so ausgestaltet, dass die Oberfläche stetig ist, also keine Kanten und Sprünge aufweist. Solche Kanten und Sprünge sind problematisch bezüglich dem mechanischem Abrieb. Kanten am härteren keramischen Aufbauteil können bei einer Relativbewegung der aufeinanderliegenden Oberflächen in das weichere metallische Material des Basiskörpers eindringen und Material abscheren. Umgekehrt können Kanten am weicheren Basiskörper leichter durch das keramische Material abgeschert werden. Stetige Oberflächen minimieren diese Quelle von mechanischem Materialabtrag.

Im gezeigten Beispiel ist die Ausnehmung 23 des Basiskörpers 2 konisch geformt. Bei dem Vorsprung 33 des Aufbauteils 3 ist der Kontaktbereich 5 ebenfalls konisch geformt, passend zur Form der Ausnehmung. Am apikalen Ende des Vorsprungs 33 hingegen sinkt in einem Randbereich der Kontaktfläche die Steigung der Kegelmantelfläche in Bezug auf die Längsachse 11, so dass zwischen der Oberfläche der Ausnehmung 23 und der Oberfläche des Vorsprungs 33 gegen die Längsachse hin eine stetig grösser werdende Lücke entsteht (vgl. Pfeil B in Figur 2). Analog nimmt am koronalen Ende des Vorsprungs 33 in einem Randbereich der Kontaktfläche die die Steigung der Kegelmantelfläche in Bezug auf die Längsachse 11 zu, so dass ebenfalls eine stetig grösser werdende Lücke entsteht (vgl. Pfeil C in Figur 2). Als Folge dieser Ausgestaltung des Kontaktbereichs 5 gibt es keine Kanten am Ende des Kontaktbereichs von Ausnehmung 23 und Vorsprung 33, welche Material abschaben können oder welche abgeschert werden können.

In einer nicht dargestellten anderen Ausführungsvariante kann alternativ oder zusätzlich die Oberfläche der Ausnehmung 23 so ausgestaltet sein, dass gegen ein apikales Ende der Ausnehmung hin der Steigungswinkel der konischen Oberfläche der Ausnehmung 23 gegenüber der Längsachse 11 zunimmt, und gegen ein koronales Ende der Ausnehmung hin der Steigungswinkel der konischen Oberfläche der Ausnehmung gegenüber der Längsachse 11 abnimmt, so dass ebenfalls an den Enden des Kontaktbereichs eine stetig anwachsende Lücke zwischen Ausnehmung und Vorsprung resultiert.

In den beiden vorgenannten Ausführungsbespielen weisen die Oberflächen von Basiskörper und Ausbauteil im Kontaktbereich mindestens eine geometrische Stetigkeit G1 auf. Besonders vorteilhaft ist die geometrische Stetigkeit G2, wie bei dem in den Figuren gezeigten Beispiel.

Zur form- und kraftschlüssigen Verbindung von Basiskörper 2 und Aufbauteil 3 des Dentalimplantats 1 dient eine Verbindungschraube 4. Die Verbindungsschraube 4 umfasst einen zylindrischen Bolzen 44 mit Aussengewinde 41 und einen Schraubenkopf 43. Im gezeigten Beispiel weist der Schraubenkopf eine konkave Vertiefung für einen Sechskantschlüssel auf, so dass die Schraube ein- und ausgedreht werden kann. Dem Fachmann sind auch andere Möglichkeiten bekannt, eine Schraube mit einem Schraubwerkzeug wirkzuverbinden.

Die Verbindungsschraube 4 ist vorteilhaft aus Metall gefertigt, jedoch können sie auch aus Keramik gefertigt sein. Keramische Schrauben sind jedoch wesentlich empfindlicher gegenüber Scherkräften.

Der Innendurchmesser des Durchgangslochs 35 des Aufbauteils 3 ist so gewählt, dass im zusammengebauten Zustand des Dentalimplantats 1 der gewindelose Abschnitt des Schraubenbolzens 44 bündig im Durchgangsloch 35 anliegt. Die Schraube 4 zieht den Basiskörper und das Aufbauteil mit einer gewissen Zugkraft zusammen, so dass der konische Vorsprung 33 des Aufbauteils in die komplementäre konische Vertiefung 23 des Basiskörpers gepresst wird. Es resultiert eine feste und kraftschlüssige Verbindung zwischen Basiskörper und Aufbauteil, die gleichzeitig auch den Innenraum des Dentalimplantats bestehend aus Sackloch 26 und Durchgangsloch 35 in Bezug auf die Verbindung zwischen Basiskörper und Aufbauteil dichtend abschliesst.

Auf dem zusammengebauten Dentalimplantat wie in Figur 1 gezeigt kann dann auf dem Aufbauteil 3 eine Suprakonstruktion, beispielsweise eine keramische Zahnkrone, montiert werden, beispielsweise durch Verkleben. Vorteilhaft schliesst diese Suprakonstruktion den Aufbaukörper nach aussen hin dichtend ab, so dass die Verbindungsschraube vollständig innerhalb des Dentalimplantats zu liegen kommt.

Die vorliegende Erfindung ist in ihrem Umfang nicht auf die hier beschriebenen spezifischen Ausführungsformen beschränkt. Vielmehr ergeben sich für den Fachmann aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen. Zusätzlich werden in der Beschreibung verschiedene Referenzen zitiert, deren Offenbarungsgehalt hiermit in deren Gesamtheit durch Referenz in die Beschreibung mit aufgenommen wird.

### Bezugszeichenliste

- 1: Dentalimplantat
- 11: Längsachse
- 2: Basiskörper
- 21: Oberfläche des Basiskörpers im Kontaktbereich
- 22: Aussengewinde
- 23: Ausnehmung
- 25: Innengewinde
- 26: Sackloch
- 3: Aufbauteil
- 31: Oberfläche des Aufbauteils im Kontaktbereich
- 33: Vorsprung
- 34: Körper des Aufbauteils
- 35: Durchgangsloch
- 4: Verbindungsschraube
- 41: Aussengewinde
- 43: Schraubenkopf
- 44: Schraubenbolzen
- 5: Kontaktbereich

## Patentansprüche

1. Modulares Dentalimplantat (1) mit einem in einem Kieferknochen verankerbaren Basiskörper (2), welches aus einem für Implantate geeigneten metallischen Werkstoff gefertigt ist, und einem mit dem Basiskörper verbindbaren Aufbauteil (3), welches aus einem für Implantat-Aufbauteile geeigneten keramischem Werkstoff gefertigt ist;
wobei sich im zusammengebauten Zustand des Dentalimplantats der Basiskörper und das Aufbauteil in einem Kontaktbereich (5) berühren, beziehungsweise in einem Kontaktbereich (5) aneinander liegend angeordnet sind; und
wobei die Oberfläche (31) des Aufbauteils in dem genannten Kontaktbereich derart bearbeitet ist, dass sie in Abhängigkeit der Härte des metallischen Werkstoffes des Basiskörpers und der Härte des keramischen Werkstoffes des Aufbauteils einen Mittenrauwert Ra aufweist, welcher im operativen Betrieb des Dentalimplantats eine Beschädigung der Oberfläche (21) des Basiskörpers in dem genannten Kontaktbereich durch das Aufbauteil, insbesondere einen zerspanenden Materialabtrag, verhindert.

2. Dentalimplantat nach einem der vorherigen Ansprüche, wobei die Oberfläche (31) des Aufbauteils (3) im Kontaktbereich (5) poliert ist.

3. Dentalimplantat nach einem der vorherigen Ansprüche, wobei im Kontaktbereich (5) der Mittenrauwert Ra der Oberfläche (31) des Aufbauteils (3) ≤ 0.08 Mikrometer, vorteilhaft ≤ 0.04 Mikrometer, und besonders vorteilhaft ≤ 0.02 Mikrometer beträgt.

4. Dentalimplantat nach einem der vorherigen Ansprüche, wobei die Oberfläche (31) des Aufbauteils (3) im Kontaktbereich (5) beschichtet /und/oder glasiert ist.

5. Dentalimplantat nach einem der vorherigen Ansprüche, wobei die Oberfläche (21) des Basiskörpers (2) im Kontaktbereich (5) beschichtet und/oder gehärtet ist.

6. Dentalimplantat nach einem der vorherigen Ansprüche, wobei der Basiskörper (2) und/oder das Aufbauteil (3) im Kontaktbereich (5) keine Kanten aufweist.

7. Dentalimplantat nach einem der vorherigen Ansprüche, wobei im Kontaktbereich (5) die Oberflächen (21, 31) des Basiskörpers (2) und des Aufbauteils (3) G1-Stetigkeit aufweisen, und vorteilhaft G2-Stetigkeit.

8. Basiskörper (2) für ein modulares Dentalimplantat, welcher dazu vorgesehenen ist, in einem Kieferknochen verankert und mit einem Aufbauteil (3) eines Dentalimplantat (1) verbunden zu werden zu werden; wobei der Basiskörper aus einem für Implantate geeigneten metallischen Werkstoff gefertigt ist; wobei die Oberfläche (21) in einem Kontaktbereich (5) des Basiskörpers dafür vorgesehen ist, im zusammengebauten Zustand des Dentalimplantates eine Oberfläche (31) des Kontaktbereichs (5) des Aufbauteils (3) zu berühren, beziehungsweise auf der Oberfläche des Kontaktbereichs des Aufbauteils aufzuliegen; und wobei die Oberfläche des Basiskörpers in dem genannten Kontaktbereich beschichtet und/oder gehärtet ist.

9. Basiskörper nach Anspruch 8, wobei der Basiskörper (2) im Kontaktbereich (5) keine Kanten aufweist.

10. Dentalimplantat nach Anspruch 8 oder 9, wobei im Kontaktbereich (5) die Oberfläche (21) des Basiskörpers (2) stetig und/oder abgerundet ist.

11. Aufbauteil (3) für ein modulares Dentalimplantat, welches dazu vorgesehen ist, mit einem Basiskörper (2) eines Dentalimplantat (1) verbunden zu werden, wobei das Aufbauteil (3) aus einem für Implantate geeigneten keramischem Werkstoff gefertigt ist, wobei die Oberfläche (31) in einem Kontaktbereich (5) des Aufbauteils dafür vorgesehen ist, im zusammengebauten Zustand des Dentalimplantates eine Oberfläche (21) des Kontaktbereichs (5) des Basiskörpers (2) zu berühren, beziehungsweise auf der Oberfläche des Kontaktbereichs des Basiskörpers aufzuliegen; und wobei im Kontaktbereich der Mittenrauwert Ra der Oberfläche des Aufbauteils ≤ 0.08 Mikrometer ist, vorteilhaft ≤ 0.04 Mikrometer ist, und besonders vorteilhaft ≤ 0.02 Mikrometer ist.

12. Aufbauteil nach Anspruch 11, wobei die Oberfläche (31) des Aufbauteils (3) im Kontaktbereich (5) poliert und/oder glasiert ist.

13. Aufbauteil nach Anspruch 11 oder 12, wobei das Aufbauteil (3) im Kontaktbereich (5) keine Kanten aufweist.

14. Aufbauteil nach einem der Ansprüche 11 bis 13, wobei im Kontaktbereich (5) die Oberfläche (31) des Aufbauteils (3) stetig und/oder abgerundet ist.

15. Verfahren zur Herstellung eines modularen Dentalimplantats (1) mit einem in einem Kieferknochen verankerbaren Basiskörper (2), welcher aus einem für Implantate geeigneten metallischen Werkstoff gefertigt ist, und einem an dem Basiskörper befestigbaren Aufbauteil (3), welches aus einem keramischem Werkstoff gefertigt ist, umfassend die Schritte:
- Bereitstellen eines gesinterten keramischen Aufbauteils, beispielsweise aus Zirkonoxid;
- Behandlung einer Oberfläche des keramischen Aufbauteiles in einem Kontaktbereich, in welchem im zusammengebauten Zustand des Dentalimplantats sich der Basiskörper und das Aufbauteil berühren, beziehungsweise in welchem der Basiskörper und das Aufbauteil aneinander liegend angeordnet sind, so dass im Kontaktbereich ein Mittenrauwert Ra der Oberfläche des Aufbauteils ≤ 0.08 Mikrometer, vorteilhaft ≤ 0.04 Mikrometer, und besonders vorteilhaft ≤ 0.02 Mikrometer resultiert.
